Europäisches Patentamt

European Patent Office

Office européen des brevets

(19)

(11) Veröffentlichungsnummer: **0 040 675 B1**

(12) **EUROPÄISCHE PATENTSCHRIFT**

(45) Veröffentlichungstag der Patentschrift:
27.06.84

(21) Anmeldenummer: 81101910.8

(22) Anmeldetag. 14.03.81

(51) Int. Cl.³: **B 60 G 17/04**

(54) Selbstpumpende Niveauregelungsvorrichtung für Fahrzeuge, insbesondere Kraftfahrzeuge.

(30) Priorität: 24.05.80 DE 3020050

(43) Veröffentlichungstag der Anmeldung:
02.12.81 Patentblatt 81/48

(45) Bekanntmachung des Hinweises auf die Patenterteilung:
27.06.84 Patentblatt 84/26

(84) Benannte Vertragsstaaten:
**FR GB IT SE**

(56) Entgegenhaltungen:
**DE - A - 1 630 067
DE - A - 2 541 841
DE - A - 2 800 549
DE - B - 1 135 779
DE - B - 1 505 454
FR - A - 444 280
FR - A - 765 505
FR - E - 94 271
US - A - 1 340 233
US - A - 1 687 039
US - A - 3 623 746**

(73) Patentinhaber: **Boge GmbH, Bogestrasse 50,
D-5208 Eitorf/Sieg (DE)**

(72) Erfinder: **Meller, Theo, Dr.-Ing., Zum Höhenstein 47,
D-5208 Eitorf/Sieg (DE)**
Erfinder: **Knecht, Heinz, Hombacher Strasse 28,
D-5208 Eitorf/Sieg (DE)**

**Beschreibung**

Die Erfindung bezieht sich auf eine selbstpumpende Niveauregelungsvorrichtung für Fahrzeuge, insbesondere Kraftfahrzeuge, mit wenigstens einem, vorzugsweise dämpfenden, hydropneumatischen Teleskop-Federelement mit Gasfederraum sowie einem Pump- und Regelelement, welches in Abhängigkeit von den Ein- und Ausfederungsbewegungen wenigstens einer Radachse des Fahrzeuges zur Niveauerhöhung Öl in den Arbeitsraum des Teleskop-Federelements pumpt, und bei Überschreiten eines Sollniveaus eine Rückflußöffnung freigibt.

Es ist bekannt, eine selbstpumpende Niveauregelungsvorrichtung von der vorstehend beschriebenen Gattung, wie sie z. B. in der DE-PS 1 135 779, insbesondere Abb. 2, grundsätzlich beschrieben ist, zwischen zwei nach oben gerichteten Hebeln oszillierbar anzuordnen, welche an zwei einander zugeordneten schwingenden Achshälften eines Fahrzeugs im Bereich von deren Anlenkung am Fahrzeugaufbau starr befestigt sind. Eine derartige Niveauregelungsvorrichtung arbeitet sehr wirtschaftlich und ist besonders kompakt. Sie macht es jedoch wegen der sich bei großen Übersetzungsverhältnissen (beispielsweise Hebelarm Federelement zu Rad wie 1 zu 5) ergebenden großen Abstützkräfte erforderlich, daß die Fahrzeugachsen entsprechend stark dimensioniert werden. Hieraus ergeben sich bei einem vorgegebenen Werkstoff nicht nur entsprechend erhöhte Werkstoff- und Bearbeitungskosten, sondern es ergibt sich auch ein entsprechend erhöhtes Gewicht der Achsen. Bekanntlich ist man jedoch bestrebt, zum Zwekke der Energieeinsparung das Eigengewicht der Fahrzeuge und somit deren Einzelteile so gering wie möglich zu halten.

Darüber hinaus ist eine Niveauregelungseinrichtung bekannt (z. B. US-PS 3 623 746), bei der ein separates Regelelement verwendet wird. Nachteilig ist jedoch auch bei dieser Ausführung, daß das Pumpelement direkt auf dem Radträger angeordnet ist. Bei Kurvenfahrten des Fahrzeuges wird dabei das kurveninnere Rad entlastet und dem Regelelement wird ein entladenes Fahrzeug simuliert. Diese Simulation löst den Regelvorgang und damit die Entlastung des Fahrzeuges aus. Bei mehreren Kurven hintereinander wird das Fahrzeug so lange abgeregelt bis der Aufbau auf den Anschlägen anliegt und keine Federung mehr vorhanden ist.

Der vorliegenden Erfindung liegt die Aufgabe zugrunde, eine einfache und wirksame selbstpumpende Niveauregelungsvorrichtung der eingangs beschriebenen Gattung zu schaffen, welche die bekannten Niveauregelungsvorrichtungen unter weitestmöglicher Beibehaltung von deren Vorteilen insbesondere dahingehend verbessert, daß die auf die Fahrzeugachsen oder sonstige Abstützteile wirkenden Abstützkräfte verringert und damit diese Abstützelemente kleiner und leichter gehalten werden können.

Diese Aufgabe wird erfindungsgemäß dadurch gelöst, daß das von Fahrzeugfederungsaufgaben freigestellte Regelelement aus Pumpe, Höhenregler und Ölvorratsraum in Kompaktbauweise gebildet und vorzugsweise im mittleren Bereich der Radachse angeordnet ist und daß sich das Teleskop-Federelement gesondert vom Regelelement oszillierbar in an sich bekannter Weise im Bereich der Fahrzeugräder zwischen Fahrzeugaufbau und Radachse befindet und daß das Regelelement zwischen zwei nach oben gerichteten Hebeln angeordnet ist, welche an zwei einander zugeordneten schwingenden Achshälften im Bereich von deren Anlenkung am Fahrzeugaufbau starr befestigt sind.

Infolge der erfindungsgemäß vorgenommenen Verteilung der auf die Abstützteile wirkenden Kräfte über die Länge der Abstützteile ergeben sich günstigere Krafteinleitungen, so daß die Abstützteile wie Radachsen oder dergleichen, kleiner und leichter gemacht werden können. Dies wird bei der Erfindung praktisch dadurch erreicht, daß an der Stelle der bisherigen Niveauregelungsvorrichtung mit integriertem Teleskop-Federelement jetzt nur noch das Pump- und Regelelement angeordnet ist, bei welchem die auftretenden abzustützenden Kräfte relativ klein sind. Hingegen ist das Teleskop-Federelement aufgeteilt für die einzelnen Räder im Bereich dieser angeordnet und rufen dort bei den nunmehr wesentlich verringerten Übersetzungsverhältnissen bedeutend niedrigere Abstützkräfte hervor. Im übrigen ergibt sich der Vorteil, daß ein einziges Pump- und Regelelement zur Druckversorgung und Regelung einer größeren Anzahl von hydropneumatischen Federelementen dienen kann. Dabei kann das Pump- und Regelelement wegen der auftretenden besonders geringen Abstützkräfte auch an Punkten größeren Übersetzungsverhältnisse (Rad/Pump- und Regelelement), wie Lenkern, Hebeln, Stabilisatoren etc. angebracht werden. Zwischen den einzelnen durch das zentrale Pump- und Regelelement beaufschlagten Teleskop-Federelementen ergibt sich auf bekannte Weise durch Verbindung dieser untereinander und die dabei entstehende Drosselwirkung in den Verbindungsleitungen eine Ausgleichsmöglichkeit.

Andererseits besitzt die erfindungsgemäße Niveauregelungsvorrichtung weiterhin den Vorteil großer Wirtschaftlichkeit durch Beibehaltung der Selbstpump-Funktion, wobei das Selbstpumpen und das Regeln in ein und demselben Element, nämlich dem Pump- und Regelelement ausgeführt wird. Eine Verwendung von zusätzlichen, externe Energie verbrauchenden Einrichtungen wie bei den fremdgespeisten Niveauregelungsvorrichtungen ist nicht erforderlich. Sämtliche Elemente der erfindungsgemäßen Niveauregelungsvorrichtung sind standardisierbar.

Es ist zwar von den fremdgespeisten hydropneumatischen Niveauregelungsvorrichtungen grundsätzlich bekannt, jeweils ein Teleskop-Federelement im Bereich der Fahrzeugräder zwischen Fahrzeugaufbau und Radachse oszillierbar anzuordnen. Bei diesen bekannten Niveauregelungsvorrichtungen ergibt sich jedoch ein erhöhter Aufwand dadurch, daß zum einen die Zufuhr zusätzlicher externer Energie sowie eine hierzu erforderliche Fremdspeis-Vorrichtung nebst Reservebehälter separat vom Regelelement sowie eine entsprechende zusätzliche Verrohrung erforderlich sind. Im übrigen ist jeweils eine Einregelung, d. h. eine Einjustierung des Regelers notwendig.

Gemäß einer besonders bevorzugten erfindungsgemäßen Ausführungsform ist das Pump- und Regelelement durch einen Zylinder mit zwei Stirnwänden gebildet, welcher einen zentralen Pumpenraum mit einer in diesem oszillierbaren, nach außen austretenden Pumpenstange und einen den Pumpenraum umgebenden Ölvorratsraum aufweist, wobei der Pumpenraum zu einen über einen ein Einlaßventil enthaltenden Einlaßkanal mit dem Ölvorratsraum und zum anderen über einen ein Auslaßventil enthaltenden Auslaßkanal mit den Teleskop-Federelementen in Verbindung steht, und wobei der Auslaßkanal mit einem in der Zwischenwand zwischen Pumpenraum und Ölvorratsraum verlaufenden Ablaßkanal in offener Verbindung steht, der über, vorzugsweise im mittleren Bereich des Pumpenraums angeordnete, erste Ablaßbohrungen mit diesem in Verbindung steht, denen in der Zwischenwand befindliche zweite Ablaßbohrungen zugeordnet sind, die den Pumpenraum mit dem Ölvorratsraum verbinden.

Ein derartiges Pump- und Regelelement ist im Aufbau und in der Funktionsweise besonders einfach und hat eine hohe Funktionssicherheit. Solange die Regelbohrungen darstellenden Ablaßbohrungen von der Pumpenstange verdeckt sind, wird durch die oszillierenden Bewegungen dieser in Abhängigkeit von den Ein- und Ausfederungsbewegungen der Radachsen Öl vom Ölvorratsraum in den Pumpenraum angesaugt und in die hydropneumatischen Federelemente gedrückt. Ist ein durch die Ablaßbohrungen vorgegebenes Sollniveau erreicht, so wird über diese Öl aus dem Arbeitsraum des Pump- und Regelelements zurückbefördert. Die Pumpenstange bildet mit Vorteil gleichzeitig das Betätigungs- und Führungsteil des Pump- und Regelelements. Somit ergibt sich eine einfache Niveauregelung des Fahrzeugaufbaus.

Vorteilhafterweise ist die Pumpenstange an ihrem im Pumpenraum befindlichen freien Ende schwach konisch ausgebildet, wobei die Länge des konischen Endabschnitts im wesentlichen dem Abstand der äußersten Ablaßbohrungen entspricht. Hierdurch wird auf besonders einfache Weise eine Verminderung der Pumpleistung um das Sollniveau und damit eine besonders stabile Regelung ermöglicht.

Vorteilhafterweise befindet sich im Ölvorratsraum ein unter einem Basisdruck stehendes Gaspolster. Hierdurch wird das Vorsehen eines zusätzlichen Ventils zum Mindestdruck-Halten vermieden.

Mit Vorteil weist das Pump- und Regelelement je ein am äußeren Pumpenstangenende sowie an der gegenüberliegenden Stirnwand des Zylinders angeordnetes elastisches Lager zur Befestigung an den angrenzenden Fahrzeugteilen auf. Hierdurch ergibt sich die Möglichkeit einer günstigen Beeinflussung der Pumpstößigkeit, wobei im Hinblick auf die relativ geringen äußeren Abmessungen des Pump- und Regelelements relativ große elastische Lager verwendet werden können.

Die Erfindung wird nachstehend anhand von in der Zeichnung schematisch dargestellten Ausführungsbeispielen näher erläutert. Es zeigt

Fig. 1 eine Schemazeichnung eines eine selbstpumpende Niveauregelungsvorrichtung nach der Erfindung enthaltenden Fahrzeug-Fahrgestells;

Fig. 2 im Längsschnitt ein erfindungsgemäßes Pump- und Regelelement.

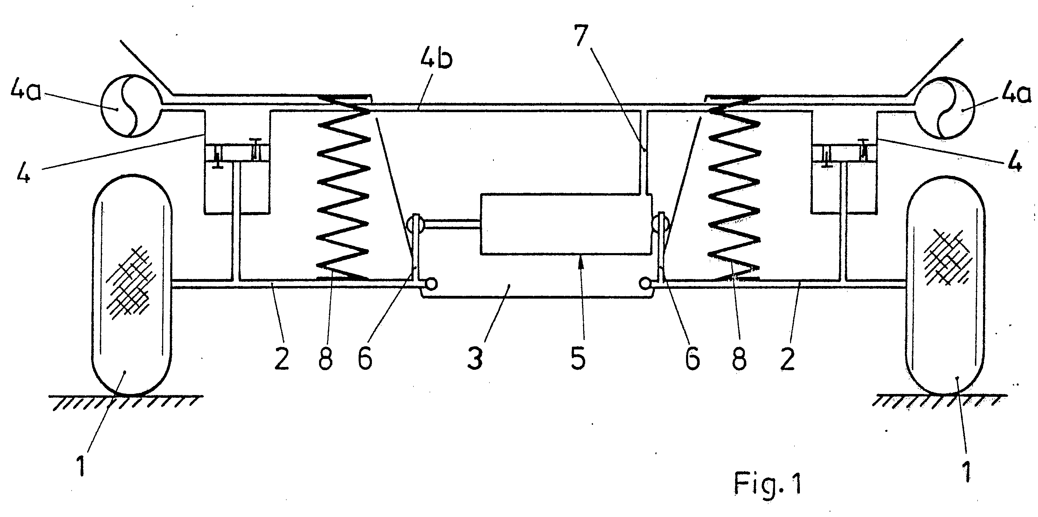

Fig. 1 zeigt in stark schematisierter Darstellung eine erste Ausführungsform einer erfindungsgemäßen selbstpumpenden Niveauregelungsvorrichtung für Kraftfahrzeuge. Dabei sind mit 1 die Fahrzeugräder bezeichnet, welche mittels schwingenden Achshälften 2 am Fahrzeugaufbau 3 schwenkbar angelenkt sind. Im Bereich der Fahrzeugräder 1 ist jeweils ein dämpfendes hydropneumatisches Teleskop-Federelement 4 mit Gasfederraum 4a von an sich bekannter Bauart zwischen Fahrzeugaufbau 3 und Radachse 2 oszillierbar angeordnet. Beide Teleskop-Federelemente sind durch eine Verbindungsleitung 4b miteinander verbunden.

Die erfindungsgemäße selbstpumpende Niveauregelungsvorrichtung weist ferner ein Pump- und Regelelement 5 auf, welches separat im mittleren Bereich der Fahrzeugachse 2 von deren Ein- und Ausfederungsbewegungen beaufschlagbar angeordnet ist. Im einzelnen ist das Pump- und Regelelement 5 zwischen zwei Hebeln 6 oszillierbar angeordnet, welche jeweils an den ihnen zugeordneten schwingenden Achshälften 2 im Bereich von deren Anlenkung am Fahrzeugaufbau 3 starr befestigt sind.

Das Pump- und Regelelement 5 pumpt in Abhängigkeit von den Ein- und Ausfederungsbewegungen der Radachse 2 durch eine Hochdruckleitung 7 zur Niveauerhöhung Öl in den Arbeitsraum der Teleskop-Federelemente 4, während das Pump- und Regelelement 5 bei Überschreiten eines Sollniveaus Öl aus dem Arbeitsraum der Teleskop-Federelemente 4 durch die Hochdruckleitung 7 zurückbefördert.

Die beschriebene Ausbildung der Anordnung der erfindungsgemäßen selbstpumpenden hydropneumatischen Niveauregelungsvorrichtung hat vor allem den Vorteil, daß die an der Radachse 2 im Bereich von deren Anlenkpunkten auftretenden Kräfte besonders niedrig gehalten werden. Beispielsweise betragen die im Pump- und Regelelement 5 allein auftretenden Pumpkräfte gemäß einem zahlenmäßigen Ausführungsbeispiel 60 bis 70 kp. Diese Kräfte sind praktisch vernachlässigbar gegenüber den bei den bekannten selbstpumpenden hydropneumatischen Niveauregelungsvorrichtungen mit integriertem Teleskop-Federelement dort auftretenden Federkräften von 7000 kp.

Der Vollständigkeit halber sei noch erwähnt, daß bei dem gezeigten Ausführungsbeispiel zwischen Fahrzeugachse 2 und Fahrzeugaufbau 3 ferner noch mechanische Tragfedern 8 angeordnet sind. Die hydropneumatischen Federelemente 4/4a sind somit in vorteilhafter Weise teiltragend.

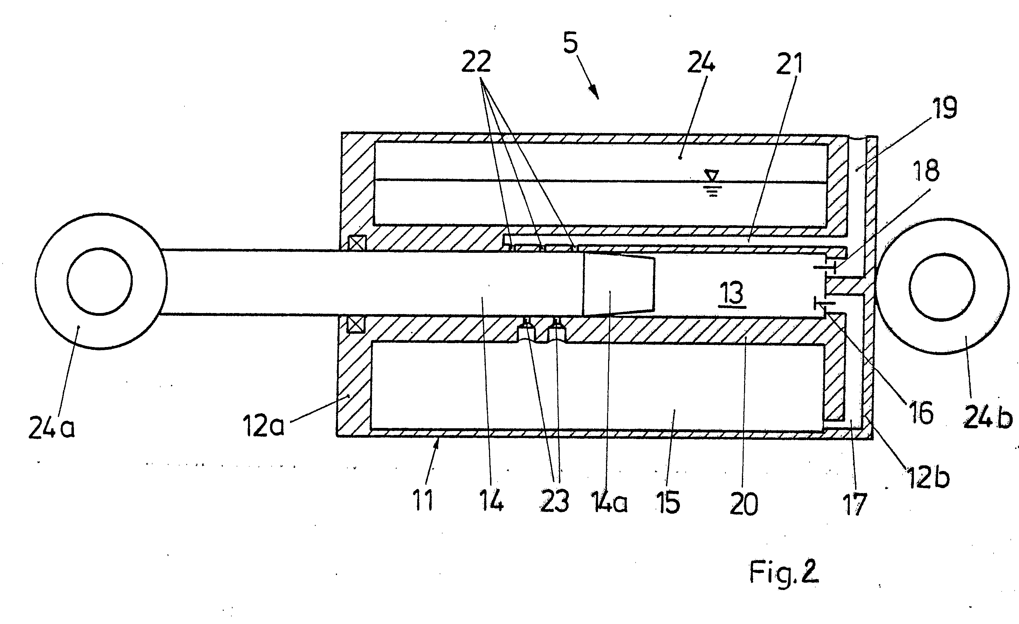

Fig. 2 zeigt im einzelnen den grundsätzlichen Aufbau eines erfindungsgemäßen Pump- und Regelelements 5. Dieses ist durch einen Zylinder 11 mit zwei Stirnwänden 12a, 12b gebildet, welcher einen zentralen Pumpenraum 13 mit einer in diesem oszillierbaren, nach außen austretenden Pumpenstange 14 und einen den Pumpenraum 13 umgebenden Ölvorratsraum 15 aufweist. Der Pumpenraum 13 ist zum einen über einen ein Einlaßventil 16 enthaltenden Einlaßkanal 17 mit dem Ölvorratsraum 15 und zum anderen über einen ein Auslaßventil 18 enthaltenden Auslaßkanal 19 mit den Teleskop-Federelementen 4/4a verbunden.

Der Auslaßkanal 19 steht ferner mit einem in der Zwischenwand 20 zwischen Pumpenraum 13 und Ölvorratsraum 15 verlaufenden Ablaßkanal 21 in offener Verbindung, der über im mittleren Bereich des Pumpenraums 13 angeordnete erste Ablaßbohrungen 22 mit dem Pumpenraum 13 in Verbindung steht. Den ersten Ablaßbohrungen 22 sind in der Zwischenwand 20 befindliche zweite Ablaßbohrungen 23 zugeordnet, die den Pumpenraum 13 mit dem Ölvorratsraum 15 verbinden.

Die Pumpenstange 14 ist an ihrem im Pumpenraum 13 befindlichen freien Ende 14a schwach konisch ausgebildet, wobei die Länge des konischen Endabschnitts 14a im wesentlichen dem Abstand der äußersten Ablaßbohrungen 22 entspricht.

Im Ölvorratsraum 15 befindet sich ein unter einem Basisdruck stehendes Gaspolster 24.

Das Pump- und Regelelement 5 weist schließlich je ein am äußeren Pumpenstangenende sowie an der gegenüberliegenden Stirnwand 12b des Zylinders 11 angeordnetes elastisches Lager 24a bzw. 24b zur Befestigung an den angrenzenden Fahrzeugteilen auf.

Die Funktionsweise des Pump- und Regelelements 5 ist aufgrund der vorstehenden Beschreibung seines konstruktiven Aufbaus für den Fachmann ohne weiteres erkennbar und wurde bereits weiter oben näher erläutert. Ergänzend sei lediglich der Ordnung halber noch bemerkt, daß der Auslaßkanal 19 in die in Fig. 1 gezeigte Hochdruckleitung 7 mündet.

**Patentansprüche**

1. Selbstpumpende Niveauregelungsvorrichtung für Fahrzeuge, insbesondere Kraftfahrzeuge, mit wenigstens einem, vorzugsweise dämpfenden, hydropneumatischen Teleskop-Federelement (4) mit Gasfederraum (40) sowie einem selbstpumpenden Regelelement (5), das in Abhängigkeit von den Ein- und Ausfederungsbewegungen wenigstens einer Radachse (2, 2') des Fahrzeuges zur Niveauerhöhung Öl in den Arbeitsraum des Teleskop-Federelementes (4) pumpt und bei Überschreiten eines Sollniveaus eine Rückflußöffnung freigibt, dadurch gekennzeichnet, daß das von Fahrzeugfederungsaufgaben freigestellte Regelelement (5) aus Pumpe (13, 14), Höhenregler (22, 23) und Ölvorratsraum (15) in Kompaktbauweise gebildet und vorzugsweise im mittleren Bereich der Radachse (2, 2') angeordnet ist und daß sich das Teleskop-Federelement (4) gesondert vom Regelelement (5) oszillierbar in an sich bekannter Weise im Bereich der Fahrzeugräder (1, 1') zwischen Fahrzeugaufbau (3, 3') und Radachse (2, 2') befindet und daß das Regelelement (5) zwischen zwei nach oben gerichteten Hebeln (6) angeordnet ist, welche an zwei einander zugeordneten schwingenden Achshälften (2) im Bereich von deren Anlenkung am Fahrzeugaufbau (3) starr befestigt sind.

2. Niveauregelungsvorrichtung nach Anspruch 1, dadurch gekennzeichnet, daß das Pump- und Regelelement (5, 5') durch einen Zylinder (11) mit zwei Stirnwänden (12a, 12b) gebildet ist, welcher einen zentralen Pumpenraum (13) mit einer in diesem oszillierbaren, nach außen austretenden Pumpenstange (14) und einen den Pumpenraum (13) umgebenden Ölvorratsraum (15) aufweist, wobei der Pumpenraum (13) zum einen über einen ein Einlaßventil (16) enthaltenden Einlaßkanal (17) mit dem Ölvorratsraum (15) und zum anderen über einen ein Auslaßventil (18) enthaltenden Auslaßkanal (19) mit den Teleskop-Federelementen (4/4a) in Verbindung steht, und wobei der Auslaßkanal (19) mit einem in der Zwischenwand (20) zwischen Pumpenraum (13) und Ölvorratsraum (15) verlaufenden Ablaßkanal (21) in offener Verbindung steht, der über, vorzugsweise im mittleren Bereich des Pumpenraums (13) angeordnete, erste Ablaßbohrungen (22) mit diesem in Verbindung steht, denen in der Zwischenwand (20) befindliche zweite Ablaßbohrungen (23) zugeordnet sind, die den Pumpenraum (13) mit dem Ölvorratsraum (15) verbinden.

3. Niveauregelungsvorrichtung nach Anspruch 2, dadurch gekennzeichnet, daß die Pumpenstange (14) an ihrem im Pumpenraum (13) befindlichen freien Ende (14a) schwach konisch ausgebildet ist, wobei die Länge des konischen Endabschnitts (14a) im wesentlichen dem Abstand der äußersten Ablaßbohrungen (22) entspricht.

4. Niveauregelungsvorrichtung nach Anspruch 2 oder 3, dadurch gekennzeichnet, daß sich im Ölvorratsraum (15) ein unter einem Basisdruck stehendes Gaspolster (24) befindet.

5. Niveauregelungsvorrichtung nach einem der Ansprüche 2 bis 4, dadurch gekennzeichnet, daß das Pump- und Regelelement (5) ein am äußeren Pumpenstangenende sowie an der gegenüberliegenden Stirnwand (12b) des Zylinders (11) angeordnetes elastisches Lager (24a, 24b) zur Befestigung an den angrenzenden Fahrzeugteilen aufweist.

6. Niveauregelungsvorrichtung nach einem der Ansprüche 2 bis 5, dadurch gekennzeichnet, daß die Pumpenstange (14) gleichzeitig das Betätigungs- und Führungsteil des Pump- und Regelelementes (5, 5') bildet.

## Claims

1. Self-pumping levelling device for vehicles, particularly for motor vehicles, with at least one hydro-pneumatic telescopic spring element (4), preferably including damping, with a gas spring chamber (40) and a self-pumping control element (5) which pumps fluid into the working chamber of the telescopic spring element (4) to increase the level in dependence on the inward and outward spring movements of at least one wheel axle (2, 2') of the vehicle, and when a pre-set level is exceeded it uncovers a return path, characterized in that the control element (5), which is freed from vehicle springing functions, is formed by a pump (13, 14) a height regulator (22, 23) and a fluid reservoir chamber (15) of compact construction and is preferably arranged in the central region of the axle (2, 2') and that the telescopic spring element (4) is free to oscillate independently of the control element (5) and is present in a manner known in itself in the region of the vehicle wheels (1, 1') between the vehicle frame (3, 3') and the axle (2, 2'), and that the control element (5) is arranged between two upwardly directed levers (6) which are rigidly secured on two mutually associated swinging half-axles (2) in the region of their pivotal connection to the vehicle frame (3).

2. Levelling device according to claim 1, characterized in that the pumping and control element (5, 5') ist formed by a cylinder (11) having two end faces (12a, 12b), which cylinder comprises a central pump chamber (13) with a pump plunger (14) which can oscillate within it and extends outwards, and a fluid reservoir chamber (15) surrounding the pump chamber (13), the pump chamber (13) being in communication on the one hand through an inlet passage (17) containing an inlet valve (16) with the fluid reservoir chamber (15) and on the other hand through an outlet passage (19) containing an outlet valve (18) with the telescopic spring element (4/4a), and the outlet passage (19) being in open communication with a discharge passage (21) extending within the intermediate wall (20) between the pump chamber (13) and the fluid reservoir chamber (15), and this discharge passage (21) being in communication with the pump chamber (13) through first discharge bores (22) which are preferably disposed in the central region of the latter, and with which are associated second discharge bores (23) which are present in the intermediate wall (20) and connect the pump chamber (13) to the fluid reservoir chamber (15).

3. Levelling device according to claim 2, characterized in that the pump plunger (14) is made lightly coned at its free end (14a) which is within the pump chamber (13), the length of the conical end portion (14a) corresponding substantially to the spacing between the outermost discharge bores (22).

4. Levelling device according to claim 2 or 3, characterized in that a gas cushion (24) subjected to a basic pressure is present in the fluid reservoir chamber (15).

5. Levelling device according to one of claims 2 to 4, chracterized in that the pumping and control element (5) has resilient mountings (24a, 24b) arranged on the outer end of the pump plunger and on the opposite end (12b) of the cylinder (11) for attachment to the adjacent parts of the vehicle.

6. Levelling device according to one of claims 2 to 5, characterized in that the pump plunger (14) simultaneously forms the actuating and guiding portion of the pumping and control element (5, 5').

## Revendications

1. Correcteur d'assiette autopompant pour véhicules, et notamment véhicules à moteur, avec au moins un ressort téléscopique (4) hydropneumatique, de préférence amortisseur et comprenant une chambre (4a) de ressort pneumatique, et avec un élément de régulation (5) autopompant, qui refoule de l'huile dans la chambre de travail du ressort téléscopique (4) pour éléver l'assiette en fonction des mouvements de compression et de détente d'un essieu (2, 2') au moins du véhicule, et qui dégage un orifice de retour en cas de dépassement d'une assiette de consigne, ledit correcteur étant caractérisé en ce que l'élément de régulation (5), libéré des tâches de suspension du véhicule, est constitué par une pompe (13, 14), un régulateur de hauteur (22, 23) et un réservoir d'huile (15) en construction compacte, et disposé de préférence dans la partie centrale de l'essieu (2, 2'); le ressort téléscopique (4) est monté en oscillation, séparément de l'élément de régulation (5) et de façon connue au voisinage des roues (1, 1') du véhicule, entre la carrosserie (3, 3') et l'essieu (2, 2'); et l'élément de régulation (5) est disposé entre deux leviers (6) dirigés vers le haut et rigidement fixés sur deux demi-essieux (2) oscillants correspondants, au voisinage de leur articulation sur la carrosserie (3).

2. Correcteur d'assiette selon revendication 1, caractérisé en ce que l'élément de pompage et de régulation (5, 5') est constitué par un cylindre (11) à deux parois frontales (12a, 12b), comprenant une enceinte (13) centrale, une tige de pompe (14) oscillant dans cette dernière et sortant à l'extérieur, et un réservoir d'huile (15) entourant l'enceinte de pompe (13), qui est reliée d'une part au réservoir d'huile (15) par un canal d'entrée (17) comprenant une soupape d'entrée (16), et d'autre part aux ressorts téléscopiques (4/4a) par un canal de sortie comprenant une soupape de sortie (18) et relié par une liaison ouverte à un canal de purge (21), s'étendant dans la paroi intermédiaire (20), entre l'enceinte de pompe (13) et le réservoir d'huile (15), et relié à ladite enceinte (13) par des premiers orifices de purge (22), de préférence stués dans la partie centrale de l'enceinte (13) et auxquels sont affectés des seconds orifices de purge (23), situés dans la paroi intermédiaire (20) et reliant l'enceinte (13) au réservoir d'huile (15).

3. Correcteur d'assiette selon revendication 2, caractérisé en ce que l'extrémité libre (14a) de la tige de pompe (14) située dans l'enceinte (13) est légèrement conique, la longueur du tronçon d'extrémité conique (14a) étant sensiblement égale à la distance des orifices de purge extérieure (22).

4. Correcteur d'assiette selon une des revendications 2 ou 3, caractérisé en ce que le réservoir d'huile (15) contient un coussin de gaz (24) sous une pression de base.

5. Correcteur d'assiette selon une quelconque des revendications 2 à 4, caractérisé en ce que l'élément de pompage et de régulation (5) comprend un palier élastique (24a, 24b) monté sur l'extrémité extérieure de la tige de pompe et sur la paroi frontale (12b) du cylindre (11) en regard, pour la fixation sur les pièces adjacentes du véhicule.

6. Correcteur d'assiette selon une quelconque des revendications 2 à 5, caractérisé en ce que la tige de pompe (14) constitue simultanément la pièce de commande et de guidage de l'élément de pompage et de régulation (5, 5').

Fig.1

Fig. 2

0 040 675